# EUROPEAN PATENT APPLICATION

(11) **EP 4 184 874 A2**
(43) Date of publication of application: **24.05.2023**
(21) Application number: 22208357.8
(22) Date of filing: 18.11.2022
(51) Int. Cl.: H04L 12/28

(54) **METHOD AND SYSTEM FOR INTERACTION BETWEEN VEHICLE AND SMART DEVICE**

(30) Priority: 19.11.2021 CN 202111408406
(71) Applicant: Nio Technology (Anhui) Co., Ltd, Hefei City, Anhui 230601 (CN)
(72) Inventor: LU, Tongxing, Jiading Shanghai (CN); WU, Chenggui, Jiading Shanghai (CN)
(74) Representative: Vossius & Partner Patentanwälte Rechtsanwälte mbB

(57) **Abstract**

The disclosure relates to the technical field of Internet of vehicles, and particularly provides a method and system for interaction between a vehicle and a smart device, in order to solve the technical problem in the related art of incapability of implementing mutual control of a vehicle and a smart home by means of a smart device. To this end, a smart home control method of the disclosure includes: obtaining a first control instruction output by a cloud server, the first control instruction being obtained by converting a first instruction output by a vehicle to the cloud server; and outputting the first control instruction to a smart home, to control the smart home. A smart speaker is controlled by a vehicle to further implement remote control of the vehicle over a smart home, and when a user walks from the vehicle to home, the smart home already works as required by the user. Therefore, user requirements are met, and user experience is improved.

## Description

### Technical Field

The disclosure relates to the technical field of Internet of vehicles, and particularly provides a method and system for interaction between a vehicle and a smart device.

### Background Art

With the development of Internet, vehicle remote control has been applied more and more extensively. A current vehicle remote control technology may only implement remote control over some devices of vehicles with the Internet. However, in real life, there is an urgent need for a solution for mutual control of a vehicle and a smart device, to meet a requirement that a smart home has been turned on before a user arrives at home or that a corresponding device in a vehicle has worked before the user gets in the vehicle.

Accordingly, there is a need for a new solution for interaction between a vehicle and a smart device in this field to solve the foregoing problems.

### Summary of the Disclosure

In order to overcome the foregoing shortcomings, the disclosure is proposed to solve or at least partially solve the technical problem in the related art of incapability of implementing mutual control of a vehicle and a smart home by means of a smart device. The disclosure provides a method and system for interaction between a vehicle and a smart device.

According to a first aspect, the disclosure provides a smart home control method applied to a smart device, the method including the following steps: obtaining a first control instruction output by a cloud server, the first control instruction being obtained by converting a first instruction output by a vehicle to the cloud server; and outputting the first control instruction to a smart home, to control the smart home.

In an implementation, the method further includes: before the obtaining a first control instruction output by a cloud server, registering account information based on a mobile phone number and a vehicle identification number, and sending the account information to the cloud server, to establish a connection between the smart device and the cloud server.

According to a second aspect, the disclosure provides a smart home control apparatus, including an obtaining module and a first control module. The obtaining module is configured to obtain a first control instruction output by a cloud server, the first control instruction being obtained by converting a first instruction output by a vehicle to the cloud server. The first control module is configured to output the first control instruction to a smart home, to control the smart home.

In an implementation, the smart home control apparatus includes a smart device capable of performing voice, image, or action interaction, and the smart device includes any one of a smart speaker, a smart television, a smartphone, and an IPAD.

According to a third aspect, a vehicle control method is provided, which is applied to a vehicle, and includes the following steps: sending vehicle state information to a cloud server, the vehicle state information including at least the vehicle being in an ignition off or in an ignition on state; when the vehicle is in the ignition off state, receiving a vehicle wakeup instruction output by the cloud server, waking up the vehicle based on the vehicle wakeup instruction to bring the vehicle into the ignition on state, and feeding back the vehicle state information of the vehicle after wakeup to the cloud server; and when the vehicle is in the ignition on state, receiving a second control instruction output by the cloud server, and controlling the vehicle based on the second control instruction, the second control instruction being obtained by converting a second instruction output by a smart device to the cloud server.

In an implementation, the method further includes: before the receiving a second control instruction output by the cloud server, registering account information based on a mobile phone number and a vehicle identification number, and sending the account information to the cloud server, to establish a connection between the vehicle and the cloud server.

According to a fourth aspect, a vehicle control apparatus is provided, which is applied to a vehicle and includes: an information sending module configured to send vehicle state information to a cloud server, the vehicle state information including at least the vehicle being in an ignition off state or in an ignition on state; a first receiving module configured, when the vehicle is in the ignition off state, to receive a vehicle wakeup instruction output by the cloud server; a vehicle wakeup module configured to wake up the vehicle based on the vehicle wakeup instruction; a second receiving module configured to receive a second control instruction output by the cloud server; and a second control module configured to control the vehicle based on the second control instruction.

According to a fifth aspect, a vehicle control method is provided, which is applied to a cloud server and includes the following steps: receiving a second instruction sent by a smart device; receiving vehicle state information sent by a vehicle, the vehicle state information including at least the vehicle being in an ignition off state or in an ignition on state; determining, based on the vehicle state information sent by the vehicle, whether the vehicle is in the ignition on state; and when the vehicle is in the ignition on state, converting the second instruction into a second control instruction, and then sending the second control instruction to the vehicle, to implement remote control of the smart device over the vehicle, or when the vehicle is in the ignition off state, sending a vehicle wakeup instruction to the vehicle to wake up the vehicle, then converting the second instruction into a second control instruction, and sending the second control instruction to the vehicle, to implement remote control of the smart device over the vehicle.

According to a sixth aspect, a vehicle control apparatus is provided, which is applied to a cloud server and includes: a third receiving module configured to receive a second instruction sent by a smart device; a vehicle state information receiving module configured to receive vehicle state information sent by a vehicle, the vehicle state information including at least the vehicle being in an ignition off state or in an ignition on state; and a third control module configured to: determine, based on the vehicle state information sent by the vehicle, whether the vehicle is in the ignition on state; and when the vehicle is in the ignition on state, convert the second instruction into a second control instruction, and then send the second control instruction to the vehicle, to implement remote control of the smart device over the vehicle, or when the vehicle is in the ignition off state, send a vehicle wakeup instruction to the vehicle, convert the second instruction into a second control instruction after receiving the vehicle state information of the vehicle after wakeup, and send the second control instruction to the vehicle, to implement remote control of the smart device over the vehicle.

According to a seventh aspect, a system for interaction between a vehicle and a smart device is provided, the system including a vehicle, a cloud server, and a smart device. The vehicle is configured to: obtain a first instruction input by a user and send the first instruction to the cloud server, to implement remote control over a smart home based on the cloud server; or send a vehicle state to the cloud server, and when the vehicle is in an ignition on state, receive a second control instruction sent by the cloud server, or when the vehicle is in an ignition off state, receive a vehicle wakeup instruction sent by the cloud server to wake up the vehicle, then send the vehicle state information of the vehicle after wakeup to the cloud server, and receive a second control instruction sent by the cloud server, to implement remote control of the smart device over the vehicle. The cloud server is configured to: receive the first instruction sent by the vehicle, convert the first instruction into a first control instruction, and then send the first control instruction to the smart device; or receive a second instruction sent by the smart device and the vehicle state information sent by the vehicle, and when the vehicle is in the ignition on state, convert the second instruction into the second control instruction, and then send the second control instruction to the vehicle, or when the vehicle is in the ignition off state, send the vehicle wakeup instruction to the vehicle, convert the second instruction into the second control instruction after receiving the vehicle state information of the vehicle after wakeup, and send the second control instruction to the vehicle. The smart device is configured to obtain the second instruction input by the user and send the second instruction to the cloud server, to implement remote control over the vehicle based on the cloud server, or receive the first control instruction sent by the cloud server, to control the smart home based on the first control instruction.

According to an eighth aspect, an electronic device is provided, including a processor and a storage apparatus adapted to store a plurality of program codes. The program codes are adapted to be loaded and run by the processor to perform the smart home control method, or to perform the vehicle control method.

According to a ninth aspect, a computer-readable storage medium is provided, in which a plurality of program codes are stored, the program codes being adapted to be loaded and run by a processor to perform the smart home control method, or to perform the vehicle control method.

Solution 1: A smart home control method applied to a smart device, the method including the following steps:
obtaining a first control instruction output by a cloud server, the first control instruction being obtained by converting a first instruction output by a vehicle to the cloud server; and
outputting the first control instruction to a smart home, to control the smart home.

Solution 2: The control method according to solution 1, further including: before the obtaining a first control instruction output by a cloud server, registering account information based on a mobile phone number and a vehicle identification number, and sending the account information to the cloud server, to establish a connection between the smart device and the cloud server.

Solution 3. A smart home control apparatus, including:
an obtaining module configured to obtain a first control instruction output by a cloud server, the first control instruction being obtained by converting a first instruction output by a vehicle to the cloud server; and
a first control module configured to output the first control instruction to a smart home, to control the smart home.

Solution 4: The smart home control apparatus according to solution 3, wherein the smart home control apparatus is a smart device capable of performing voice, image, or action interaction, and the smart device includes any one of a smart speaker, a smart television, a smartphone, and an IPAD.

Solution 5: A vehicle control method applied to a vehicle, the method including the following steps:
sending vehicle state information to a cloud server, the vehicle state information including at least the vehicle being in an ignition off or in an ignition on state;
when the vehicle is in the ignition off state, receiving a vehicle wakeup instruction output by the cloud server, waking up the vehicle based on the vehicle wakeup instruction to bring the vehicle into the ignition on state, and feeding back the vehicle state information of the vehicle after wakeup to the cloud server; and when the vehicle is in the ignition on state, receiving a second control instruction output by the cloud server, and controlling the vehicle based on the second control instruction, the second control instruction being obtained by converting a second instruction output by a smart device to the cloud server.

Solution 6: The control method according to solution 5, further including: before the receiving a second control instruction output by the cloud server, registering account information based on a mobile phone number and a vehicle identification number, and sending the account information to the cloud server, to establish a connection between the vehicle and the cloud server.

Solution 7: A vehicle control apparatus applied to a vehicle, the vehicle control apparatus including:
an information sending module configured to send vehicle state information to a cloud server, the vehicle state information including at least the vehicle being in an ignition off state or in an ignition on state;
a first receiving module configured, when the vehicle is in the ignition off state, to receive a vehicle wakeup instruction output by the cloud server;
a vehicle wakeup module configured to wake up the vehicle based on the vehicle wakeup instruction;
a second receiving module configured to receive a second control instruction output by the cloud server; and
a second control module configured to control the vehicle based on the second control instruction.

Solution 8: A vehicle control method applied to a cloud server, the method including the following steps:
receiving a second instruction sent by a smart device;
receiving vehicle state information sent by a vehicle, the vehicle state information including at least the vehicle being in an ignition off state or in an ignition on state;
determining, based on the vehicle state information sent by the vehicle, whether the vehicle is in the ignition on state; and
when the vehicle is in the ignition on state, converting the second instruction into a second control instruction, and then sending the second control instruction to the vehicle, to implement remote control of the smart device over the vehicle, or
when the vehicle is in the ignition off state, sending a vehicle wakeup instruction to the vehicle, converting the second instruction into a second control instruction after receiving the vehicle state information of the vehicle after wakeup, and sending the second control instruction to the vehicle, to implement remote control of the smart device over the vehicle.

Solution 9: A vehicle control apparatus applied to a cloud server, the vehicle control apparatus including:
a third receiving module configured to receive a second instruction sent by a smart device;
a vehicle state information receiving module configured to receive vehicle state information sent by a vehicle, the vehicle state information including at least the vehicle being in an ignition off state or in an ignition on state; and
a third control module configured to: determine, based on the vehicle state information sent by the vehicle, whether the vehicle is in the ignition on state; and when the vehicle is in the ignition on state, convert the second instruction into a second control instruction, and then send the second control instruction to the vehicle, to implement remote control of the smart device over the vehicle, or when the vehicle is in the ignition off state, send a vehicle wakeup instruction to the vehicle, convert the second instruction into a second control instruction after receiving the vehicle state information of the vehicle after wakeup, and send the second control instruction to the vehicle, to implement remote control of the smart device over the vehicle.

Solution 10: A system for interaction between a vehicle and a smart device, the system including a vehicle, a cloud server, and a smart device, wherein
the vehicle is configured to: obtain a first instruction input by a user and send the first instruction to the cloud server, to implement remote control over a smart home based on the cloud server; or send a vehicle state to the cloud server, and when the vehicle is in an ignition on state, receive a second control instruction sent by the cloud server, or when the vehicle is in an ignition off state, receive a vehicle wakeup instruction sent by the cloud server to wake up the vehicle, then send the vehicle state information of the vehicle after wakeup to the cloud server, and receive a second control instruction sent by the cloud server, to implement remote control of the smart device over the vehicle;
the cloud server is configured to: receive the first instruction sent by the vehicle, convert the first instruction into a first control instruction, and then send the first control instruction to the smart device; or receive a second instruction sent by the smart device and the vehicle state information sent by the vehicle, and when the vehicle is in the ignition on state, convert the second instruction into the second control instruction, and then send the second control instruction to the vehicle, or when the vehicle is in the ignition off state, send the vehicle wakeup instruction to the vehicle, convert the second instruction into the second control instruction after receiving the vehicle state information of the vehicle after wakeup, and send the second control instruction to the vehicle; and
the smart device is configured to obtain the second instruction input by the user and send the second instruction to the cloud server, to implement remote control over the vehicle based on the cloud server, or receive the first control instruction sent by the cloud server, to control the smart home based on the first control instruction.

Solution 11: An electronic device, including a processor and a storage apparatus adapted to store a plurality of program codes, wherein the program codes are adapted to be loaded and run by the processor to perform the smart home control method according to either of solutions 1 to 2; or the program codes are adapted to be loaded and run by the processor to perform the vehicle control method according to any one of solutions 5, 6 and 8.

Solution 12: A computer-readable storage medium in which a plurality of program codes are stored, wherein the program codes are adapted to be loaded and run by a processor to perform the smart home control method according to either of solutions 1 to 2; or the program codes are adapted to be loaded and run by the processor to perform the vehicle control method according to any one of solutions 5, 6 and 8.

The foregoing one or more technical solutions of the disclosure have at least one or more of the following beneficial effects.

A smart device, such as a smart speaker, is controlled by a vehicle to further implement remote control of the vehicle over a smart home, and when a user walks from the vehicle to home, the smart home already works as required by the user. Therefore, user requirements are met, and user experience is improved.

The vehicle is controlled by the smart device, such as the smart speaker, to implement remote control of the user over the vehicle at home, and when the user walks from home to the vehicle, a corresponding device in the vehicle already works. Therefore, user requirements are met, and user experience is improved.

According to the disclosure, the vehicle and the smart speaker are simultaneously connected to a cloud server, thereby implementing mutual control of the vehicle and the smart speaker. Therefore, convenience is brought to the user, and user requirements are met.

### Brief Description of the Drawings

The disclosed content of the disclosure will become more readily understood with reference to the accompanying drawings. Those skilled in the art readily understand that the accompanying drawings are merely for illustrative purposes and are not intended to limit the protection scope of the disclosure. In addition, similar components are represented by similar numbers in the figures, in which:
FIG. 1 is a schematic flowchart of main steps of a smart home control method according to an embodiment of the disclosure;
FIG. 2 is a schematic block diagram of a main structure of a smart home control apparatus according to an embodiment of the disclosure;
FIG. 3 is a schematic block diagram of a main structure of a system for interaction between a vehicle and a smart device according to an embodiment of the disclosure; and
FIG. 4 is a schematic flowchart of interaction between a vehicle and a smart device according to an embodiment of the disclosure.

### List of reference signs:

11: Obtaining module; and 12: First control module.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

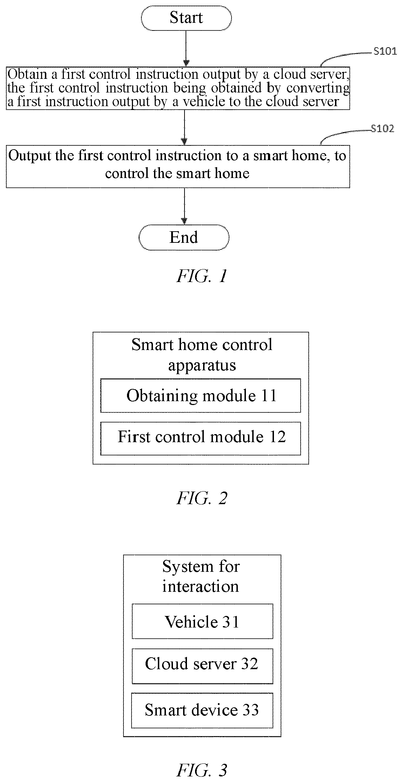

Referring to FIG. 1, FIG. 1 is a schematic flowchart of main steps of a smart home control method according to an embodiment of the disclosure. As shown in FIG. 1, the smart home control method in this embodiment of the disclosure mainly includes steps S101 to S102 below.

In step S101, a first control instruction output by a cloud server is obtained, the first control instruction being obtained by converting a first instruction output by a vehicle to the cloud server. Specifically, a vehicle first obtains a first instruction input by a user and outputs the first instruction to a cloud server,; and after receiving the first instruction, the cloud server may convert the first instruction into a first control instruction according to a stored correspondence between a first instruction and a first control instruction. In general, the first instruction input by the user may be a voice instruction. When the first instruction is a voice instruction, a voice recognition module in the vehicle recognizes the voice instruction input by the user. In addition, the first instruction may also be a body movement, a gesture, or another instruction. In this case, an image collection apparatus in the vehicle collects and sends the instruction to the cloud server, and the cloud server matches the body movement, the gesture, or the other instruction with an instruction prestored therein, so as to obtain the first control instruction.

In step S102, the first control instruction is output to a smart home, to control the smart home. Specifically, the first control instruction herein includes information corresponding to a corresponding smart home, such as a serial number, so that the corresponding smart home can perform a corresponding action based on the received first control instruction. Therefore, the smart home is controlled. The smart home in the disclosure may include, but is not limited to, a smart air conditioner, a smart refrigerator, a smart electric cooker, and the like at home.

Based on steps S 101 to S102 described above, a smart device is controlled by a vehicle to further implement remote control of the vehicle over a smart home, and when a user walks from the vehicle to home, the smart home already works as required by the user. Therefore, user requirements are met, and user experience is improved.

In an implementation, the method further includes: before the obtaining a first control instruction output by a cloud server, registering account information based on a mobile phone number and a vehicle identification number, and sending the account information to the cloud server, to establish a connection between the smart device and the cloud server. Specifically, account registration may be performed by using a mobile phone number and a vehicle identification number (VIN) and taking the mobile phone number as an account Identity (ID), so as to obtain account information containing the mobile phone number, the vehicle identification number, and a password. After successful account registration, the account information is sent to the cloud server and saved, to establish a connection between the smart device and the cloud server. Illustratively, a smart speaker is used as an example of a smart device for description. After the user has the smart speaker, a mobile phone and the smart speaker may be both connected to a home Wireless Fidelity (WIFI) hotspot. The mobile phone sends account information and an Internet Protocol (IP) address and port of the cloud server to the smart speaker. Then, the smart speaker is connected to the cloud server according to the IP address and port of the cloud server, and sends the account information to the cloud server. The cloud server determines whether the account information is consistent with corresponding information saved therein. If YES, identity authentication of the smart speaker by the cloud server succeeds. As such, a connection between the smart device and the cloud server is established.

It should be noted that, although the steps are described in a specific order in the foregoing embodiments, those skilled in the art can understand that in order to achieve the effects of the disclosure, different steps are not necessarily performed in such an order, but may be performed simultaneously (in parallel) or in other orders, and these changes shall all fall within the scope of protection of the disclosure.

Further, the disclosure further provides a smart home control apparatus. Referring to FIG. 2, FIG. 2 is a block diagram of a main structure of a smart home control apparatus according to an embodiment of the disclosure. As shown in FIG. 2, the smart home control apparatus in this embodiment of the disclosure mainly includes an obtaining module 11 and a first control module 12. In some embodiments, one or both of the obtaining module 11 and the first control module 12 may be combined into one module. In some embodiments, the obtaining module 11 may be configured to obtain a first control instruction output by a cloud server, the first control instruction being obtained by converting a first instruction output by a vehicle to the cloud server. The first control module 12 may be configured to output the first control instruction to a smart home, to control the smart home. In an implementation, for detailed description of function implementation, reference may be made to the description of steps S 101 to S 102.

In an implementation, the smart home control apparatus includes a smart device capable of performing voice, image, or action interaction, and the smart device includes any one of a smart speaker, a smart television, a smartphone, and an IPAD.

The smart home control apparatus is used to implement the embodiment of the smart home control method shown in FIG. 1. The technical principles of, technical problems solved by, and technical effects provided by the smart home control apparatus and the smart home control method are similar, and those skilled in the art can clearly understand that, for ease and simplicity of description, for a specific process and a related description of the smart home control apparatus, reference may be made to the description of the embodiments of the smart home control method, and details will not be described herein again.

Further, the disclosure further provides a vehicle control method, which is applied to a vehicle, and includes steps S301 to S303 below.

In step S301, account information is registered based on a mobile phone number and a vehicle identification number, and the account information is sent to the cloud server, to establish a connection between the vehicle and the cloud server. Specifically, account registration may be performed by using a vehicular interconnection system. Specifically, account registration is performed by using a mobile phone number and a vehicle identification number (VIN) and taking the mobile phone number as an account ID, so as to obtain account information containing the mobile phone number, the vehicle identification number, and a password. After successful account registration, the account information is sent to a cloud server and saved, to establish a connection between a vehicle and the cloud server.

In step S302, after a connection between a vehicle and a cloud server is established based on the foregoing step, the vehicle sends vehicle state information to the cloud server in real time, the vehicle state information including at least the vehicle being in an ignition off state or in an ignition on state.

In step S303, when the vehicle is in the ignition off state, a vehicle wakeup instruction output by the cloud server is received, the vehicle is woken up based on the vehicle wakeup instruction to bring the vehicle into the ignition on state, and the vehicle state information of the vehicle after wakeup is fed back to the cloud server. The vehicle wakeup instruction herein may be issued to the vehicle by the cloud server in the form of a short message, which, however, is not limited to this. When the vehicle is in the ignition on state, a second control instruction output by the cloud server is received, and the vehicle is controlled based on the second control instruction, The second control instruction is obtained by converting a second instruction output by a smart device to the cloud server. Specifically, in this embodiment, a t-box module of the vehicle may receive the vehicle wakeup instruction sent by the cloud server, so as to wake up the vehicle. In addition, the t-box module may receive the second control instruction sent by the cloud server, and send the second control instruction to an execution unit, to control the vehicle by using the execution unit. In general, control over the vehicle in this embodiment includes remote locking and unlocking of the vehicle, locking and unlocking of a trunk, remote flashing and honking, remote start of an engine, remote vehicle window opening and closing control, remote sunroof opening and closing control, remote air conditioning control, remote seat heating and ventilation control, remote steering wheel heating control, remote exterior rearview mirror folding and unfolding, remote issuing of navigation position information, and the like.

By means of steps S301 to S303 described above, a vehicle is controlled by a smart speaker, to implement remote control of a user over the vehicle at home, and when the user walks from home to the vehicle, a corresponding device in the vehicle already works. Therefore, user requirements are met, and user experience is improved.

Further, the disclosure further provides a vehicle control apparatus, which is applied to a vehicle and includes an information sending module, a first receiving module, a vehicle wakeup module, a second receiving module, and a second control module. The information sending module is configured to send vehicle state information to a cloud server, the vehicle state information including at least the vehicle being in an ignition off state or in an ignition on state. The first receiving module is configured, when the vehicle is in the ignition off state, to receive a vehicle wakeup instruction output by the cloud server. The vehicle wakeup module is configured to wake up the vehicle based on the vehicle wakeup instruction. The second receiving module is configured to receive a second control instruction output by the cloud server. The second control module is configured to control the vehicle based on the second control instruction. In an implementation, for detailed description of function implementation, reference may be made to the description of steps S301 to S303.

Further, the disclosure further provides a vehicle control method, which is applied to a cloud server, and specifically includes the following steps. First, a second instruction sent by a smart device is received, and vehicle state information sent by a vehicle is simultaneously received, the vehicle state information including at least the vehicle being in an ignition off state or in an ignition on state. Next, whether the vehicle is in the ignition on state is determined based on the vehicle state information sent by the vehicle. When the vehicle is in the ignition on state, the second instruction is converted into a second control instruction, and the second control instruction is sent to the vehicle, to implement remote control of the smart device over the vehicle. When the vehicle is in the ignition off state, a vehicle wakeup instruction is sent to the vehicle, the second instruction is converted into a second control instruction after the vehicle state information of the vehicle after wakeup is received, and the second control instruction is sent to the vehicle, to implement remote control of the smart device over the vehicle.

Further, the disclosure further provides a vehicle control apparatus, which is applied to a cloud server. The vehicle control apparatus includes a third receiving module, a vehicle state information receiving module, and a third control module. The third receiving module is configured to receive a second instruction sent by a smart device. The vehicle state information receiving module is configured to receive vehicle state information sent by a vehicle the vehicle state information including at least the vehicle being in an ignition off state or in an ignition on state. The third control module is configured to: determine, based on the vehicle state information sent by the vehicle, whether the vehicle is in the ignition on state; and when the vehicle is in the ignition on state, convert the second instruction into a second control instruction, and then send the second control instruction to the vehicle, to implement remote control of the smart device over the vehicle, or when the vehicle is in the ignition off state, send a vehicle wakeup instruction to the vehicle, convert the second instruction into a second control instruction after receiving the vehicle state information of the vehicle after wakeup, and send the second control instruction to the vehicle, to implement remote control of the smart device over the vehicle.

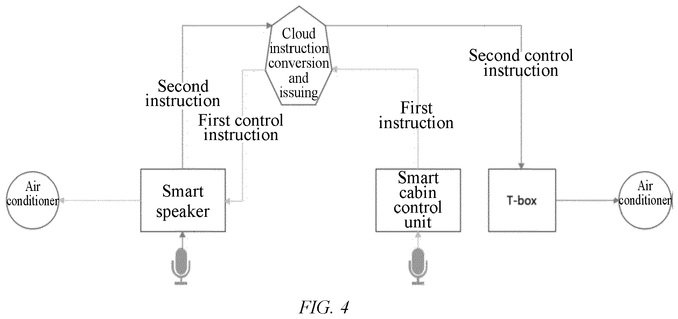

Further, as shown in FIG. 3, the disclosure further provides a system for interaction between a vehicle and a smart device, the system including a vehicle 31, a cloud server 32, and a smart device 33. The vehicle 31 is configured to: obtain and send a first instruction input by a user to the cloud server, to implement remote control over a smart home based on the cloud server; or send a vehicle state to the cloud server, and when the vehicle is in an ignition on state, receive a second control instruction sent by the cloud server, or when the vehicle is in an ignition off state, receive a vehicle wakeup instruction sent by the cloud server to wake up the vehicle, then send the vehicle state information of the vehicle after wakeup to the cloud server, and receive a second control instruction sent by the cloud server, to implement remote control of the smart device over the vehicle. The cloud server 32 is configured to: receive the first instruction sent by the vehicle, convert the first instruction into a first control instruction, and then send the first control instruction to the smart device; or receive a second instruction sent by the smart device and the vehicle state information sent by the vehicle, and when the vehicle is in the ignition on state, convert the second instruction into the second control instruction, and then send the second control instruction to the vehicle, or when the vehicle is in the ignition off state, send the vehicle wakeup instruction to the vehicle, convert the second instruction into the second control instruction after receiving the vehicle state information of the vehicle after wakeup, and send the second control instruction to the vehicle. The smart device 33 is configured to obtain the second instruction input by the user and send the second instruction to the cloud server, to implement remote control over the vehicle based on the cloud server, or receive the first control instruction sent by the cloud server, to control the smart home based on the first control instruction. As shown in FIG. 4, a smart speaker is used as an example of a smart device for description. The smart speaker may control an air conditioner in the vehicle. Moreover, the vehicle may control an air conditioner at home by means of the cloud server and the smart speaker. In this embodiment, the vehicle mainly obtains the first instruction input by the user through a smart cabin control unit.

The vehicle and the smart speaker are simultaneously connected to the cloud server, thereby implementing mutual control of the vehicle and the smart speaker. Therefore, convenience is brought to the user, and user requirements are met.

Those skilled in the art can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments can be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Further, the disclosure further provides a control apparatus. In an embodiment of the control apparatus according to the disclosure, the control apparatus includes a processor and a storage apparatus. The storage apparatus may be configured to store a program for executing the smart home control method or the vehicle control method of the foregoing method embodiments. The processor may be configured to execute a program in the storage apparatus, wherein the program includes, but is not limited to, the program for executing the smart home control method or the vehicle control method of the foregoing method embodiments. For ease of description, only parts related to the embodiments of the disclosure are shown. For specific technical details that are not disclosed, reference may be made to the method part of the embodiments of the disclosure. The control apparatus may be a control apparatus device formed by various electronic devices.

Further, the disclosure further provides a computer-readable storage medium. In an embodiment of the computer-readable storage medium according to the disclosure, the computer-readable storage medium may be configured to store a program for executing the smart home control method or the vehicle control method of the foregoing method embodiments, and the program may be loaded and run by a processor to implement the smart home control method or the vehicle control method described above. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, it should be understood that, because the configuration of modules is merely intended to illustrate functional units of the apparatus of the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred embodiments shown in the accompanying drawings. However, those skilled in the art can readily understand that the scope of protection of the disclosure is apparently not limited to these specific implementations. Those skilled in the art can make equivalent changes or substitutions to the related technical features without departing from the principle of the disclosure, and all the technical solutions with such changes or substitutions shall fall within the scope of protection of the disclosure.

## Claims

1. A smart home control method applied to a smart device, the method comprising the following steps:
obtaining a first control instruction output by a cloud server, the first control instruction being obtained by converting a first instruction output by a vehicle to the cloud server; and
outputting the first control instruction to a smart home, to control the smart home.

2. The control method according to claim 1, further comprising: before the obtaining a first control instruction output by a cloud server, registering account information based on a mobile phone number and a vehicle identification number, and sending the account information to the cloud server, to establish a connection between the smart device and the cloud server.

3. A smart home control apparatus, comprising:
an obtaining module configured to obtain a first control instruction output by a cloud server, the first control instruction being obtained by converting a first instruction output by a vehicle to the cloud server; and
a first control module configured to output the first control instruction to a smart home, to control the smart home.

4. The smart home control apparatus according to claim 3, wherein the smart home control apparatus is a smart device capable of performing voice, image, or action interaction, and the smart device comprises any one of a smart speaker, a smart television, a smartphone, and an IPAD.

5. A vehicle control method applied to a vehicle, the method comprising the following steps:
sending vehicle state information to a cloud server, the vehicle state information comprising at least the vehicle being in an ignition off or in an ignition on state;
when the vehicle is in the ignition off state, receiving a vehicle wakeup instruction output by the cloud server, waking up the vehicle based on the vehicle wakeup instruction to bring the vehicle into the ignition on state, and feeding back the vehicle state information of the vehicle after wakeup to the cloud server; and when the vehicle is in the ignition on state, receiving a second control instruction output by the cloud server, and controlling the vehicle based on the second control instruction, the second control instruction being obtained by converting a second instruction output by a smart device to the cloud server.

6. The control method according to claim 5, further comprising: before the receiving a second control instruction output by the cloud server, registering account information based on a mobile phone number and a vehicle identification number, and sending the account information to the cloud server, to establish a connection between the vehicle and the cloud server.

7. A vehicle control apparatus applied to a vehicle, the vehicle control apparatus comprising:
an information sending module configured to send vehicle state information to a cloud server, the vehicle state information comprising at least the vehicle being in an ignition off state or in an ignition on state;
a first receiving module configured, when the vehicle is in the ignition off state, to receive a vehicle wakeup instruction output by the cloud server;
a vehicle wakeup module configured to wake up the vehicle based on the vehicle wakeup instruction;
a second receiving module configured to receive a second control instruction output by the cloud server; and
a second control module configured to control the vehicle based on the second control instruction.

8. A vehicle control method applied to a cloud server, the method comprising the following steps:
receiving a second instruction sent by a smart device;
receiving vehicle state information sent by a vehicle, the vehicle state information comprising at least the vehicle being in an ignition off state or in an ignition on state;
determining, based on the vehicle state information sent by the vehicle, whether the vehicle is in the ignition on state; and
when the vehicle is in the ignition on state, converting the second instruction into a second control instruction, and then sending the second control instruction to the vehicle, to implement remote control of the smart device over the vehicle, or
when the vehicle is in the ignition off state, sending a vehicle wakeup instruction to the vehicle, converting the second instruction into a second control instruction after receiving the vehicle state information of the vehicle after wakeup, and sending the second control instruction to the vehicle, to implement remote control of the smart device over the vehicle.

9. A vehicle control apparatus applied to a cloud server, the vehicle control apparatus comprising:
a third receiving module configured to receive a second instruction sent by a smart device;
a vehicle state information receiving module configured to receive vehicle state information sent by a vehicle, the vehicle state information comprising at least the vehicle being in an ignition off state or in an ignition on state; and
a third control module configured to: determine, based on the vehicle state information sent by the vehicle, whether the vehicle is in the ignition on state; and when the vehicle is in the ignition on state, convert the second instruction into a second control instruction, and then send the second control instruction to the vehicle, to implement remote control of the smart device over the vehicle, or when the vehicle is in the ignition off state, send a vehicle wakeup instruction to the vehicle, convert the second instruction into a second control instruction after receiving the vehicle state information of the vehicle after wakeup, and send the second control instruction to the vehicle, to implement remote control of the smart device over the vehicle.

10. A system for interaction between a vehicle and a smart device, the system comprising a vehicle, a cloud server, and a smart device, wherein
the vehicle is configured to: obtain a first instruction input by a user and send the first instruction to the cloud server, to implement remote control over a smart home based on the cloud server; or send a vehicle state to the cloud server, and when the vehicle is in an ignition on state, receive a second control instruction sent by the cloud server, or when the vehicle is in an ignition off state, receive a vehicle wakeup instruction sent by the cloud server to wake up the vehicle, then send the vehicle state information of the vehicle after wakeup to the cloud server, and receive a second control instruction sent by the cloud server, to implement remote control of the smart device over the vehicle;
the cloud server is configured to: receive the first instruction sent by the vehicle, convert the first instruction into a first control instruction, and then send the first control instruction to the smart device; or receive a second instruction sent by the smart device and the vehicle state information sent by the vehicle, and when the vehicle is in the ignition on state, convert the second instruction into the second control instruction, and then send the second control instruction to the vehicle, or when the vehicle is in the ignition off state, send the vehicle wakeup instruction to the vehicle, convert the second instruction into the second control instruction after receiving the vehicle state information of the vehicle after wakeup, and send the second control instruction to the vehicle; and
the smart device is configured to obtain the second instruction input by the user and send the second instruction to the cloud server, to implement remote control over the vehicle based on the cloud server, or receive the first control instruction sent by the cloud server, to control the smart home based on the first control instruction.

11. An electronic device, including a processor and a storage apparatus adapted to store a plurality of program codes, wherein the program codes are adapted to be loaded and run by the processor to perform the smart home control method according to either of claims 1 to 2; or the program codes are adapted to be loaded and run by the processor to perform the vehicle control method according to any one of claims 5, 6 and 8.

12. A computer-readable storage medium in which a plurality of program codes are stored, wherein the program codes are adapted to be loaded and run by a processor to perform the smart home control method according to either of claims 1 to 2; or the program codes are adapted to be loaded and run by the processor to perform the vehicle control method according to any one of claims 5, 6 and 8.
